# EUROPEAN PATENT APPLICATION

(11) **EP 0 615 237 A2**
(43) Date of publication of application: **14.09.1994**
(21) Application number: 94103020.7
(22) Date of filing: 01.03.1994
(51) Int. Cl.: G11B 15/61, G11B 15/60

(54) **Tape guidance methodology with all air support system**

(30) Priority: 11.03.1993 US 998328
(71) Applicant: Datatape Incorporated, Pasadena, California 91109-7014 (US)
(72) Inventor: Grant, John Philip, c/o Eastman Kodak Company, Rochester, New York 14650-2201 (US)
(74) Representative: Maury, Richard Philip

(57) **Abstract**

A helical scan magnetic tape recorder includes a rotary head scanner (50) and an air lubricated bearing magnetic tape guidance system (42),(44),(46),(48) for correcting magnetic tape position errors in a gentle and precise manner without damage to the tape. The magnetic tape guidance system includes several magnetic tape guiding elements (42),(44),(46),(48) including a nonrotatable air lubricated bearing (62), and spaced magnetic tape edge guides (64),(68) for contacting the edges of guided magnetic tape. One of the edge guides (64) is rigidly mounted (66) and the other edge guide (68) is compliantly mounted (70). The rigidly mounted edge guide (64),(66) is adjustable. Any adjustment of the rigid edge guide (64),(66) to change the lateral position of guided magnetic tape is absorbed by the compliantly mounted edge guide (68),(70) without adjustment thereof.

## Description

This invention relates in general to helical scan magnetic tape recorders and relates, more particularly, to an all air support tape guidance apparatus in helical scan magnetic tape recorders.

Helical scan magnetic tape recorders are widely used to record and reproduce analog and digital video and data information. In a helical scan magnetic tape recorder, magnetic tape is transported around a magnetic tape path from a supply reel to a takeup reel past a rotary head scanner. The rotary head scanner includes one or more rotating magnetic heads. The magnetic tape is transported around the rotary head scanner in a helical path so that the rotating magnetic head(S) records on (or reproduces from) slant tracks across the width of the tape.

In transporting the magnetic tape around the tape path it is desirable to transport the tape in a manner which avoids physical damage to the tape and consequent loss of recorded information. At the same time, the tape must be guided at a precise angle relative to the rotary head scanner so that the rotating magnetic heads record parallel tracks on the tape and accurately reproduce information from the recorded tracks. US-A-3,912,144 and US-A-3,227,343, disclose air bearing guides for guiding magnetic tape relative to magnetic heads. The air bearing guides have both rigid and compliant edge guides. However, there is no disclosure in either of these patents of easily guiding and controlling the tape in the vicinity of the magnetic heads to correct for errors in tape angle and in tape bending moment.

There is thus a problem in the field of magnetic tape recording and reproducing apparatus in providing for correction of tape position errors (such as tape angle and tape bending moment) in a gentle and precise manner without damage to the magnetic tape.

According to the present invention there is provided a solution to the problems of the prior art of magnetic tape recording and reproducing apparatus in the correction of magnetic tape position errors in a gentle and precise manner without damage to the tape. In general, according to the present invention, there is provided in a helical scan magnetic tape recorder an air support magnetic tape guidance system including a plurality of air lubricated tape guiding elements on either side of a stationary magnetic head(s) or a rotary head scanner. Each of the tape guiding elements has an adjustable, rigidly mounted, tape edge guide and a compliant tape edge guide. The rigid tape edge guides are adjustable to correct for tape position errors while the compliant tape edge guides absorb the adjustments.

Figures 1, 2, and 3 are diagrammatic views useful in illustrating the present invention.

Figure 4 is a top plan view of an embodiment of the present invention for guiding tape relative to a rotary head scanner of a helical scan magnetic tape recorder.

Figure 5 is a partially diagrammatic, partially elevational view of a tape guiding element according to the present invention.

Although the present invention will be described below with respect to guidance of magnetic tape in a helical scan magnetic tape recorder, it will be understood that the invention may be used in other applications in which a web is transported around a path. Moreover, the air support guidance apparatus of the present invention (1) may be used in other types of magnetic tape recorders, and (2) may be used with other types of information media, such as optical tape.

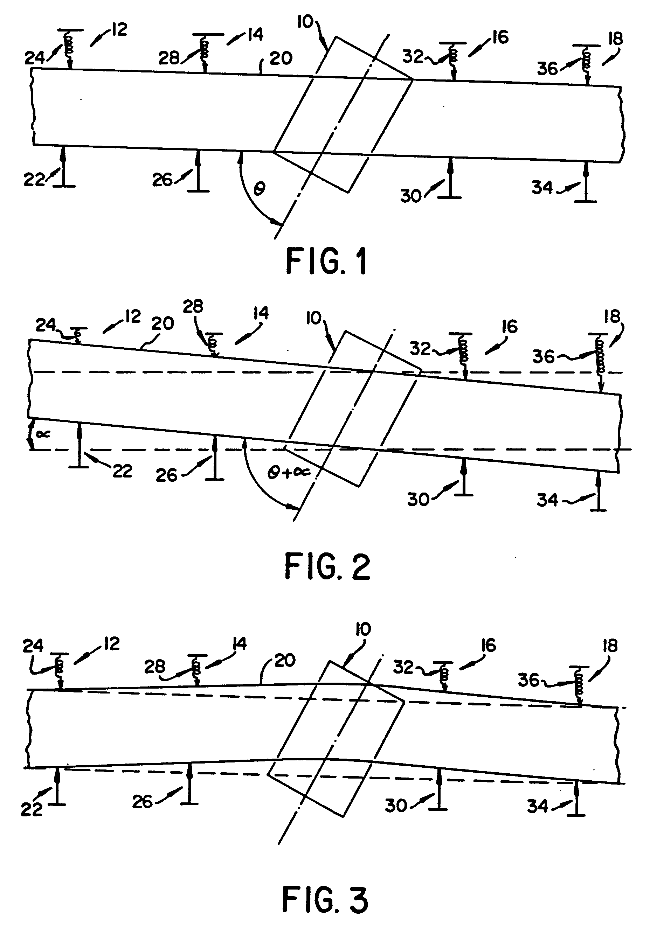

Referring now to Fig. 1, there will be described an embodiment of magnetic tape guiding apparatus according to the present invention. In general, the apparatus provides guidance and control of magnetic tape in the vicinity of a rotary head scanner of a helical scan magnetic tape recorder. The apparatus is adjustable in order to allow corrections in the tape angle (to correct trapezoidal error) and the tape bending moment (to correct curvature error). The diagrammatic view shown in Fig. 1 is representative of a three dimensional configuration, made two dimensional for simplicity. In Fig. 1, rotary head scanner 10 is rigidly mounted at an angle ϑ with respect to magnetic tape 20. Air lubricated magnetic tape guiding elements 12, 14, are located on one side of scanner 10 and air lubricated guiding elements 16, 18 are located on the other side of scanner 10. Each of these tape guiding elements provides one rigidly mounted tape edge guide and one compliant (spring loaded) tape edge guide. Thus, tape guiding elements 12, 14, 16, 18 are provided with respective rigid tape edge guides represented by solid arrows 22, 26, 30, 34, and with respective compliant tape edge guides represented by coiled arrows 24, 28, 32, 36.

By physically adjusting the elevations of the rigidly mounted tape edge guides 22, 26, 30, 34, the angle of the tape 20 with respect to the scanner 10 can be changed. This effect is illustrated in Fig. 2, wherein rigid tape edge guides 22 and 26 have been adjusted upwardly and rigid tape edge guides 30 and 34 have been adjusted downwardly. Respective compliant edge guides 24, 28, 32, 36 have absorbed the changes in the lateral position of the magnetic tape 20 without adjustment thereof.

Referring now to Fig. 3, there is shown correction of curvature error in tape 20. This is effected by physically adjusting the elevations of the rigid edge guides 26 and 30 relative to rigid edge guides 22 and 34. As shown in Fig. 3, magnetic tape 20 is curved upwardly to correct for curvature tracking error. The compliant edge guides 28 and 32 have absorbed the changes in the lateral position of tape 20. An equivalent tape curvature adjustment could be accomplished by lowering guides 22 and 34 relative to guides 26 and 30.

It will be appreciated that a combination of the two adjustments to rigid tape edge guides 20, 26, 30, 34 which are illustrated in Figs. 2 and 3 can be used to create or correct any common tape position tracking error. One use for such adjustments would be to compensate for less exact tolerances on parts of a magnetic tape recorder thereby lowering the recorder cost.

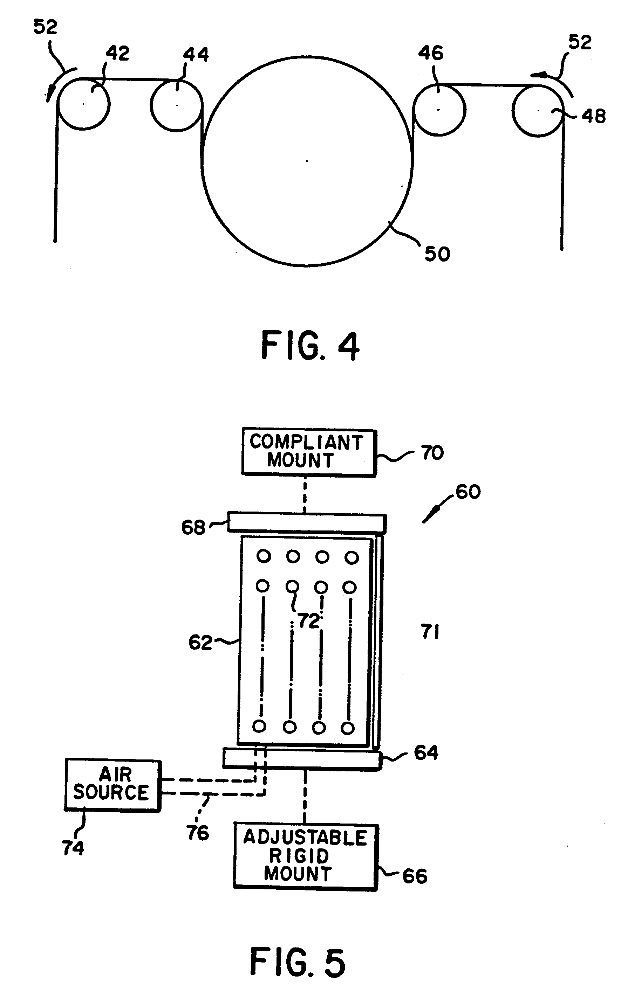

Referring now to Fig. 4, there is shown an embodiment of the present invention for guiding magnetic tape relative to a rotary head scanner of a helical scan magnetic tape recorder. As shown, a helical scan magnetic tape recorder includes a rotary head scanner 40 and air bearing tape guiding elements 42, 44, 46, 48 which guide magnetic tape 50 in a tape transport path around rotary head scanner 40. Elements 42-48 are non-rotating air bearings so that magnetic tape 50 can go around them in a helical path with the entry and exit helical angles being the same. If element 48, for example, is adjusted downward, with tape travel as shown by arrows 52, then tape 50 will approach and leave element 46 travelling uphill. This will result in a curvature of tape 50 going over scanner 40 as it returns to the normal tape path level at element 44. This is predicated on the prior tape path being normal (no tape bending) and the adjustments being very small and within the tension limit of the tape (edge tension never reducing to zero).

Referring now to Fig. 5, there is shown an exemplary tape guiding element. As shown, tape guiding element 60 includes an air bearing 62, edge guide 64, which has an adjustable rigid mount 66, and an edge guide 68 which has a compliant mount 70. Edge guides 64 and 68 guide the edges of magnetic tape 71. Air bearing 62 has openings 72 which expel air supplied to bearing 62 from air source 74 by means of conduit 76. As magnetic tape 71 is transported around element 60, the air expelled from openings 72 form an air lubricated bearing which supports tape 71.

The air bearing tape guidance apparatus of the present invention finds applicability in helical scan magnetic tape recorders. The apparatus has the advantage of correcting tape position errors in a gentle and precise manner without damage to the tape.

## Claims

1. Helical scan magnetic tape recorder apparatus comprising:
a rotary head scanner (50);
first and second spaced magnetic tape guiding elements (42), (44) located on one side of the rotary head scanner (50) and third and fourth magnetic tape guiding elements (46), (48) located on an opposite side of the rotary head scanner (50);
wherein each of the first, second, third, and fourth magnetic tape guiding elements (42), (44), (46), (48) includes a) a nonrotatable air lubricated bearing (62) for guiding the magnetic tape; b) spaced upper and lower magnetic tape edge guides (68), (64) for contacting the edges of the magnetic tape; c) means (66) for rigidly and adjustably mounting one of the upper and lower magnetic tape edge guides (68), (64); and d) means (70) for compliantly mounting the other of the upper and lower edge guides (68), (64); such that adjustment of the rigidly mounted edge guide (64) to change the lateral position of guided magnetic tape is absorbed by the compliant edge guide (68) without adjustment thereof.
